# EUROPEAN PATENT SPECIFICATION

(11) **EP 1 058 189 B1**
(45) Date of publication and mention of the grant of the patent: **14.07.2010**
(21) Application number: 00111716.7
(22) Date of filing: 31.05.2000
(51) Int. Cl.: G06F 11/00, G06F 11/36

(54) **Microcomputer with debugging system**
Mikroprozessor mit Fehlersuchsystem
Microprocesseur à système de débogage

(30) Priority: 03.06.1999 JP 15626599
(43) Date of publication of application: 06.12.2000
(73) Proprietor: NEC Electronics Corporation, Kawasaki, Kanagawa 211-8668 (JP)
(72) Inventor: Takahashi, Hiromichi, c/o NEC Corporation, Tokyo (JP)
(74) Representative: Betten & Resch

(56) References cited:
- EP-A- 0 687 974
- EP-A- 0 762 276
- EP-A- 0 869 434
- US-A- 5 491 793
- US-A- 5 930 470

## Description

### Background of the Invention

The present invention relates to a microcomputer which has an on-chip debugging function and outputs access information to an external bus in accessing internal resources.

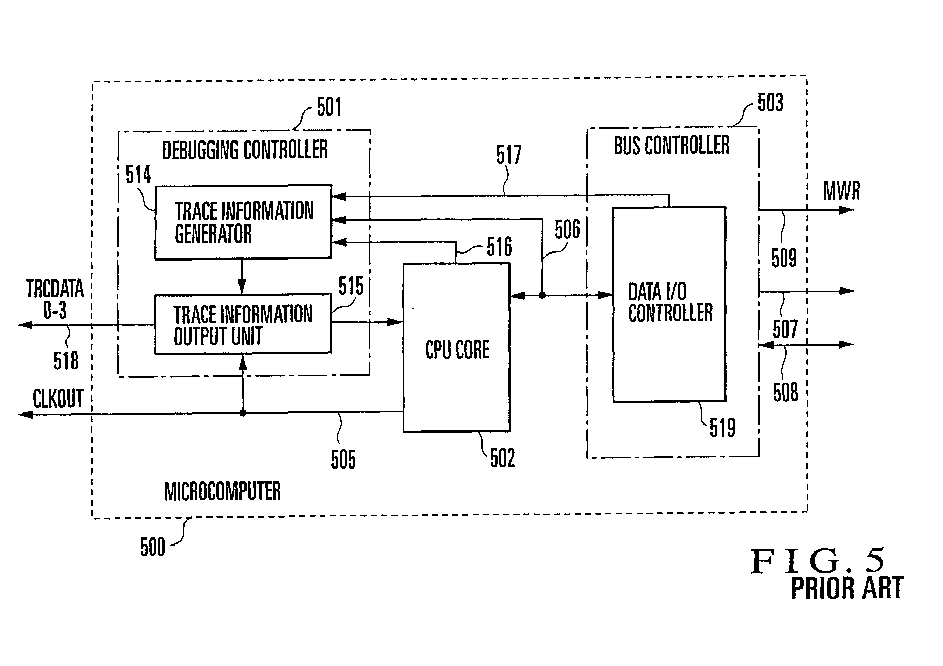

An increase in the speed of CPUs (Central Processing Units) and development in the type of CPU are remarkable. As a debugging environment coping with the speed, an on-chip debugging method of giving the CPU part of a debugging function is available. A conventional microcomputer incorporating the on-chip debugging function will be described with reference to Fig. 5.

In Fig. 5, a microcomputer 500 is constituted by a CPU core 502, bus controller 503, and debugging controller 501. The CPU core 502 performs control of generating and outputting a CLKOUT signal 505, and processing of outputting a control signal 506 and a branch destination address value to a PC trace bus 516 in executing a branch instruction generated when various instructions are executed.

The bus controller 503 comprises a data I/O controller 519 for performing I/O control based on the control signal 506 from the CPU core 502. The data I/O controller 519 exchanges an address value with an external address bus 507, exchanges data with an external data bus 508, and outputs write data to an emulation/data trace bus 517.

The debugging controller 501 comprises a trace information generator 514 for receiving signals on the PC trace bus 516 and emulation/data trace bus 517 and the control signal 506, and generating trace information, and a trace information output unit 515 for outputting trace information as a TRCDATA0-3 signal 518 in time division.

The trace information generator 514 generates trace information of a trace buffer overflow when the generator 514 receives the control signal 506 from the CPU core 502 as a result of executing a next instruction before the trace information output unit 515 outputs all trace information as the TRCDATA0-3 signal 518.

The trace packet format will be explained.

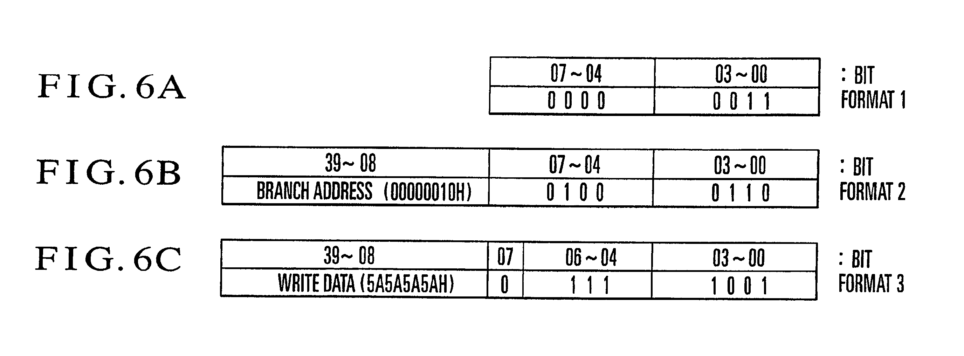

The trace packet is made up of 8 bits (format 1), as shown in Fig. 6A, or 40 bits (formats 2 and 3), as shown in Figs. 6B and 6C. In formats 1 to 3, lower four bits represent trace information. As the trace information, "0011" represents the overflow of the trace buffer, "0110" represents execution of a branch instruction, and "1001" represents execution of data access.

As shown in Fig. 6A, upper four bits in format 1 are fixed to "0000". As shown in Fig. 6B, upper four bits in format 2 represent the type of branch instruction. In this example, when an unconditional branch instruction is executed, "0100" is output.

As shown in Fig. 6C, bits 06 to 04 in format 3 represent the data access size, and "111" represents that access to one word (32 bits) has been executed. Bit 07 is fixed to "0". Bits 39 to 08 in format 2 shown in Fig. 6B represent a branch source address, whereas bits 39 to 08 in format 3 shown in Fig. 6C represent write data.

Trace information output operation of the debugging controller 501 will be described. In this case, the microcomputer 500 executes a branch instruction located at an address "000000H" in an internal memory (not shown) to branch to an address "000010H". Further, trace information is output as the TRCDATAO-3 signal 518 in executing an instruction located at an address "000010H" in the internal memory for write operation of 32-bit data "5A5A5A5AH" to an address "001000H" consecutively to the branch instruction.

In this example, the address bus width is 24 bits, the data bus width is 32 bits, and the internal buffer of the trace information output unit 515 is made up of 4 bits equal in number to the terminals of the trace information output unit 515.

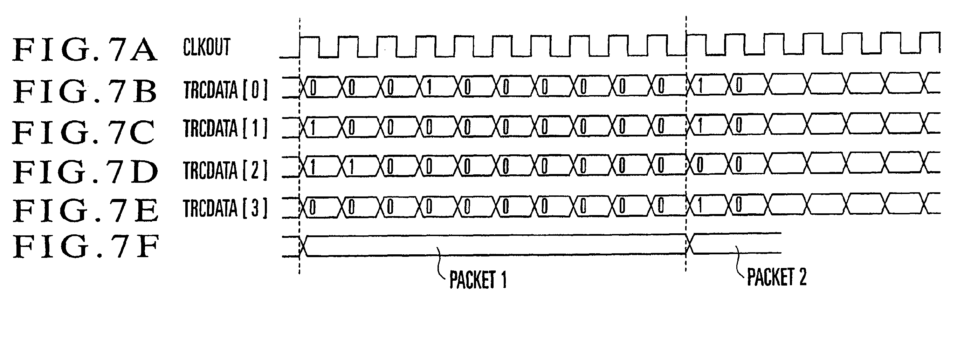

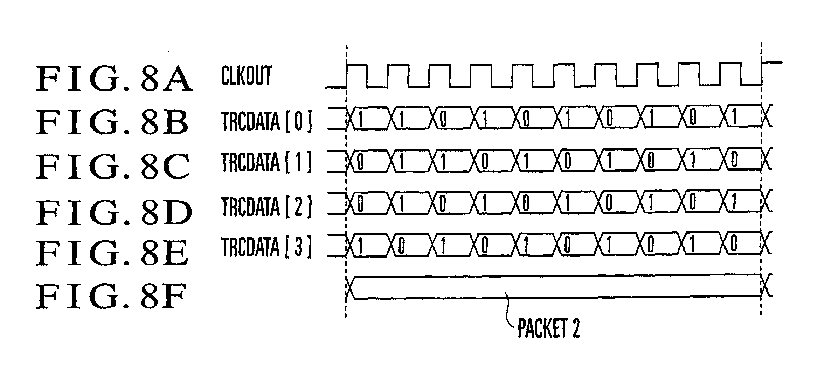

To execute a branch instruction to the address "000010H" that is stored at the address "000000H" in the internal memory, the microcomputer 500 performs processing in the following order.
I) The CPU core 502 fetches the branch instruction from the address "000000H" in the internal memory, and executes the instruction. Then, the CPU core 502 outputs, to the bus controller 503 and debugging controller 501, the control signal 506 instructing output of the branch source address "000000H" to the external address bus 507. Further, the CPU core 502 outputs the branch source address "000010H" to the PC trace bus 516. These operations are access to the internal memory, so no data is output to the external address bus 507 and external data bus 508.
II) Upon reception of the control signal 506, the trace information generator 514 in the debugging controller 501 generates 40-bit trace data of format 2 (Fig. 6B), and outputs it to the trace information output unit 515. Based on this trace data, the trace information output unit 515 outputs a packet of format 2 (Fig. 6B) as the TRCDATAO-3 signal 518 (Figs. 7B to 7E) in synchronism with the leading edge of the CLKOUT signal 505 (Fig. 7A). At this time, the TRCDATAO-3 signal 518 is output in units of 4 bits from the least significant bit at the timing of packet 1 (Fig. 7F).
   To execute a write instruction of 32-bit data "5A5A5A5AH" to the address "001000H", the microcomputer 500 performs the following processing.
III) The CPU core 502 fetches a data write instruction from the address "000010H" in the internal memory, and executes the instruction. As a result, the CPU core 502 outputs the control signal 506 to the bus controller 503 and debugging controller 501. The control signal 506 instructs output of address data "000010H" to the external address bus 507 and output of write data "5A5A5A5AH" to the external data bus 508.
   Note that the control signal 506 controls access to the memory in the microcomputer 500. Thus, even if the bus controller 503 receives the control signal 506, it does not output any data to the external address bus 507 and external data bus 508.
IV) In the debugging controller 501, the trace information generator 514, which has received the control signal 506, generates 40-bit trace data of format 3 (Fig. 6A), and outputs it to the trace information output unit 515. The trace information output unit 515, which has received the trace data, outputs trace data of format 3 (Fig. 6C) as the TRCDATAO-3 signal 518 (Figs. 8B to 8E) in synchronism with the leading edge of the CLKOUT signal 505 (Fig. 8A). At this time, the TRCDATAO-3 signal 518 is output in units of 4 bits from the least significant bit at the timing of packet 2' (Fig. 8F).
   Since the conventional microcomputer outputs trace information by the above-described method, the debugging efficiency decreases in consecutive processing. This will be explained by exemplifying a case in which branch and data write instructions are consecutively executed.

In this consecutive processing, the microcomputer 500 executes processes I) to III). In this case, completing output of trace information for the branch instruction requires 10 clocks, as shown in Figs. 7A to 7F. However, most of the recent microcomputers operate in accordance with a branch instruction at nine clocks or less because of a high-speed operation request. Even if, therefore, the next write instruction is to be executed upon completion of the branch instruction, trace information for the branch instruction has not been completed yet.

The trace information generator 514 cannot perform process IV) until the trace information output unit 515 outputs all the trace information (buffer overflow). Thus, in consecutive processing, the trace information generator 514 generates pseudo trace information represented by format 1 in Fig. 6A, and sends the information to the trace information output unit 515. The trace information output unit 515 outputs the pseudo trace information in units of 4 bits from the least significant bit at the timing of packet 2 shown in Fig. 7F.

As described above, in the conventional microcomputer incorporating the on-chip debugging function, output of trace information cannot catch up with the processing speed during consecutive processing. For this reason, only pseudo trace information is output, debugging information runs short, and the debugging efficiency decreases.

The microcomputer incorporating the debugging function suffers the above problems because the real chip function is the main, and the number of trace buffers or trace information output terminals cannot be increased

In US 5,491,793 a single chip central processing unit (CPU) for coupling with an external memory via a system bus to form a data processing system is disclosed. The central processing unit comprises a processor having means for decoding instructions and means for executing instructions. The central processing unit also comprises a first bus for connecting the processor with the system bus to communicate instructions and data between the processor and the external memory. The central processing unit further comprises debug support facilities. The debug support facilities include debug support unit, a debug support interface bus, and a diagnostic instrument.

### Summary of the Invention

It is an object of the present invention to provide a microcomputer capable of increasing the debugging efficiency.

To achieve the above object, according to the present invention, there is provided a microcomputer as defined in claim 1. According to an aspect, the microcomputer comprises an internal memory storing a control program, a CPU (Central Processing Unit) core for executing the control program stored in the internal memory, the CPU core outputting a control signal made up of connection information containing a storage address of the control program in the internal memory and an address of the internal memory generated as a result of executing the control program, instruction contents of the control program, and data generated by executing the control program, bus control means for controlling signal exchange based on an operation of the CPU core via an address bus and a data bus that are connected to an external memory, the bus control means having data I/O control means for, when the control signal is received from the CPU core, outputting an address obtained from the connection information in the control signal to the external address bus, and outputting the data in the control signal to the external data bus, and debugging control means for generating trace information necessary for debugging operation for confirming an operation by the control program, the debugging control means having trace information generation means for extracting the instruction contents in the control signal as trace information when the control signal is received from the CPU core, and trace information output means for externally outputting the trace information output from the trace information generation means.

### Brief Description of the Drawings

Fig. 1 is a block diagram showing the arrangement of the main part of a microcomputer according to the first embodiment of the present invention;
Figs. 2A to 2C are views each showing the trace packet format of trace information used in the microcomputer shown in Fig. 1;
Figs. 3A to 3H are timing charts in executing write and branch instructions by the microcomputer shown in Fig. 1;
Fig. 4 is a block diagram showing the arrangement of the main part of a microcomputer according to the second embodiment of the present invention;
Fig. 5 is a block diagram showing the arrangement of the main part of a conventional microcomputer;
Figs. 6A to 6C are views each showing the trace packet format of trace information used in the conventional microcomputer shown in Fig. 5;
Figs. 7A to 7F are timing charts in executing a branch instruction by the conventional microcomputer shown in Fig. 5; and
Figs. 8A to 8F are timing charts in executing a write instruction by the conventional microcomputer shown in Fig. 5.

### Description of the Preferred Embodiments

The present invention will be described in detail below with reference to the accompanying drawings.

### First Embodiment

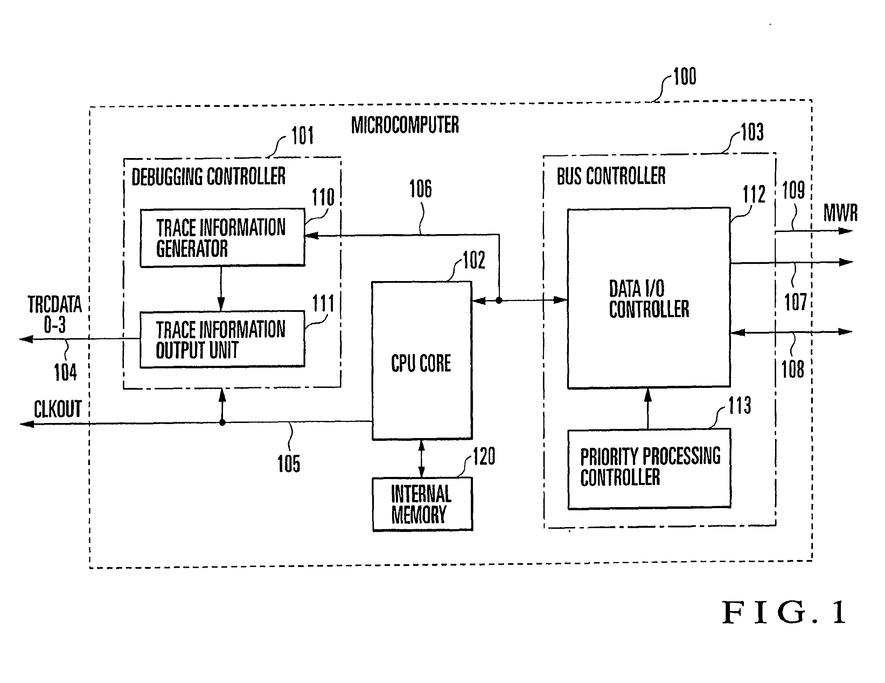

A microcomputer according to the first embodiment of the present invention will be described. As shown in Fig. 1, a microcomputer 100 is constituted by a debugging controller 101, CPU core 102, bus controller 103, and internal memory 120.

The CPU core 102 performs control of generating and outputting a CLKOUT signal 105, and processing of executing various instructions and outputting a branch destination address value as a control signal 106 in executing a branch instruction. The internal memory 120 stores control programs executed by the CPU core 102.

The bus controller 103 comprises a data I/O controller 112 for exchanging an address value with an external address bus 107 and exchanging data with an external data bus 108 on the basis of the control signal 106 from the CPU core 102, and a priority processing controller 113 for instructing priority processing based on a predetermined priority when trace information output processing and access processing to an external memory (not shown) collide with each other. The bus controller 103 performs processing of outputting an active-high write signal MWR 109 to the external memory (not shown).

The debugging controller 101 comprises a trace information generator 110 for generating trace information in accordance with the control signal 106, and a trace information output unit 111 for outputting the trace information output from the trace information generator 110 as a TRCDATA0-3 signal 104 in time division.

When the access timing to the external memory (not shown) coincides with the debugging information output timing, the microcomputer 100 gives priority to output of debugging information. This priority processing control is done by the priority processing controller 113 of the bus controller 103. The priority processing controller 113 instructs the debugging controller 101 and data I/O controller 112 to perform priority processing. In this case, the priority processing controller 113 may instruct only a controller which performs lower-priority processing, i.e., the data I/O controller 112 to suspend the processing.

The trace information generator 110 generates trace information of a trace buffer overflow when the generator 110 receives the control signal 106 from the CPU core 102 as a result of executing a next instruction before the trace information output unit 111 outputs all trace information as the TRCDATA0-3 signal 104.

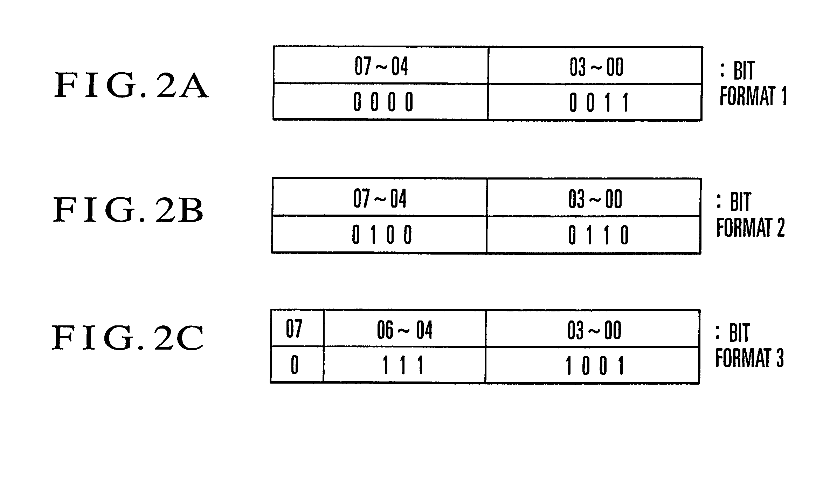

A trace packet format used in the microcomputer 100 having this arrangement will be described with reference to Figs. 2A to 2C.

In this embodiment, every trace packet is made up of 8 bits. Lower four bits represent trace information. As shown by formats 1 to 3 in Figs. 2A to 2C, "0011" represents the overflow of the trace buffer, "0110" represents execution of a branch instruction, and "1001" represents execution of data access.

Upper four bits in format 1 of Fig. 2A are fixed to "0000", and upper four bits in format 2 of Fig. 2B represent the type of branch instruction. In this embodiment, when an unconditional branch instruction is executed, "0100" is output. Bits 06 to 04 in format 3 of Fig. 2C represent the data access size, and "111" represents that access to one word (32 bits) has been executed. Bit 07 is fixed to "0".

Trace information output operation by the debugging controller 501 when branch and write are consecutively executed will be described.

The branch instruction is located at an address "000000H" in the internal memory 120 of the microcomputer 100, and is a branch instruction to an address "000010H". The write instruction is located at an address "000010H" in the internal memory 120, and a write instruction of writing 32-bit data "5A5A5A5AH" at an address "001000H". In the following description, the address bus width is 24 bits, the data bus width is 32 bits, and the trace buffer is made up of 4 bits equal in number to the terminals of the trace information output.

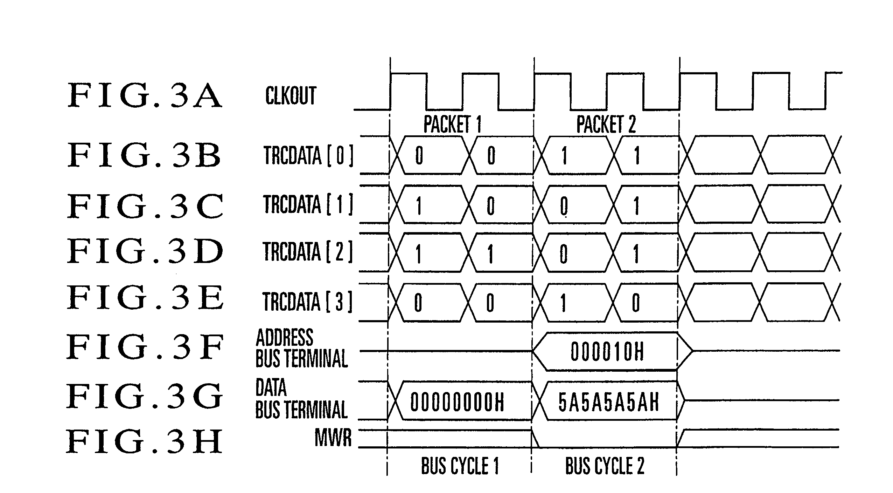

To execute a branch instruction to the address "000010H" that is located at the address "000000H" in the internal memory 120, the microcomputer 100 performs processing in the following order.
I) The CPU core 102 fetches the branch instruction from the address "000000H" in the internal memory 120, and executes the instruction. Then, the CPU core 102 outputs, to the bus controller 103 and debugging controller 101, the control signal 106 instructing output of the branch source address "000000H" to the external address bus 107.
II) Upon reception of the control signal 106, the data I/O controller 112 of the bus controller 103 outputs the branch source address "00000000H" to the external address bus 107 at the timing of bus cycle 1 (Fig. 3H).
III) Upon reception of the control signal 106, the trace information generator 110 in the debugging controller 101 generates 8-bit trace data of format 2 (Fig. 2B), and outputs it to the trace information output unit 111. The trace information output unit 111, which has received the trace data, outputs trace data as the TRCDATAO-3 signal 104 (Figs. 3B to 3E). As the TRCDATAO-3 signal 104, a packet of format 2 (Fig. 2B) is output in units of 4 bits from the least significant bit at the timing of packet 1 in synchronism with the leading edge of the CLKOUT signal 105 (Fig. 3A).
   Subsequently, write processing to an external memory (not shown) is done.
IV) The CPU core 102 fetches a data write instruction from the address "000010H" in the internal memory 120, and executes the instruction. The CPU core 102 outputs, to the bus controller 103 and debugging controller 101, the control signal 106 instructing output of address data "000010H" to the external address bus 107 and output of write data "5A5A5A5AH" to the external data bus 108.
V) Upon reception of the control signal 106, the data I/O controller 112 outputs a next signal at the timing of bus cycle 2 (Fig. 3H). The data I/O controller 112 outputs address data "000010H" (Fig. 3F) to the external address bus 107, and outputs write data "5A5A5A5AH" (Fig. 3G) to the external data bus 108. At this time, the data I/O controller 112 changes the MWR signal 109 to an inactive level "0".
VI) Upon reception of the control signal 106, the trace information generator 110 in the debugging controller 101 generates 8-bit trace data of format 3 (Fig. 2C), and outputs it to the trace information output unit 111. The trace information output unit 111, which has received the trace data, outputs trace data as the TRCDATA0-3 signal 104 (Figs. 3B to 3E). As the TRCDATA0-3 signal 104, a packet of format 3 (Fig. 2C) is output in units of 4 bits from the least significant bit at the timing of packet 2 in synchronism with the leading edge of the CLKOUT signal 105 (Fig. 3A).

As described above, according to the first embodiment, the debugging controller 101 does not perform the conventional operation of loading data on a PC trace bus or emulation/data trace bus into the trace buffer or outputting the TRCDATA0-3 signal in time division in outputting trace information. The bus controller 103 outputs, to the external address bus and external data bus, the address of an instruction executed by the CPU core 102, the address at which the branch destination and data are stored, a data destination address, or data.

The TRCDATA0-3 signal uses only a total of 8-bit packet data, as shown in Figs. 2A to 2C, which greatly reduces the number of overflows of the trace buffer, compared to the conventional microprocessor. As described above, the microcomputer need not incorporate any PC trace bus or emulation/data trace bus. Since the trace buffer requires only a small number of bits, e.g., 8 bits, trace information can be output with the same number of trace information output terminals as that of the conventional microcomputer.

### Second Embodiment

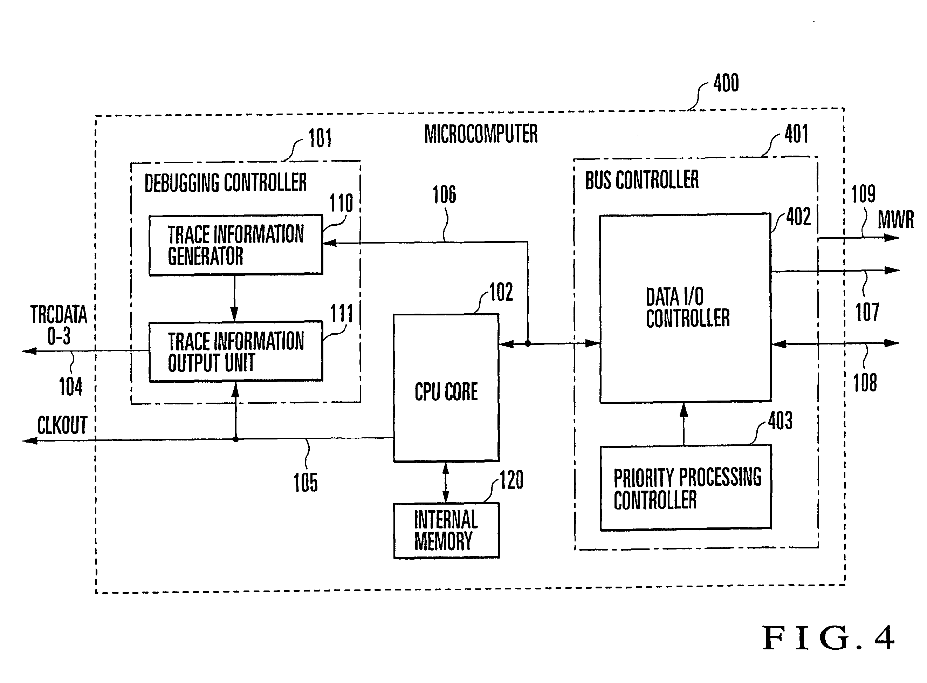

The second embodiment of the present invention will be described. As shown in Fig. 4, a microcomputer 400 in this embodiment is constituted by a debugging controller 101, CPU core 102, bus controller 401, and internal memory 120. The debugging controller 101, CPU core 102, and internal memory 120 are identical to those in Fig. 1, and a description thereof will be omitted.

The bus controller 401 comprises a data I/O controller 402 and priority processing controller 403. The data I/O controller 402 exchanges an address value with an external address bus 107, and exchanges data with an external data bus 108 on the basis of a control signal 106 from the CPU core 102. In exchanging an address value and data, a write signal MWR 109 is output to an external memory (not shown).

The priority processing controller 403 performs control of preferentially executing write operation in the external memory (not shown). The MWR signal 109 is an active-high signal.

In the first embodiment, when processing of loading data from the external memory collides with processing of outputting trace information to the external address bus 107 and external data bus 108, the priority processing controller 113 controls to perform trace information priority processing. This impairs real-time execution.

In the second embodiment, when these two processes collide with each other, the priority processing controller 403 informs the debugging controller 101 and data I/O controller 402 that priority is given to write processing to the external memory (not shown). After write processing to the external memory (not shown) ends, the microcomputer performs the same processing as in executing a branch instruction and accessing the internal memory 120. Hence, real-time execution of the microcomputer 400 is not impaired.

As has been described above, according to the present invention, the debugging controller does not process any trace information, which greatly reduces the number of overflows of the trace buffer used in the debugging controller, compared to the conventional microprocessor. Consequently, the debugging efficiency in the microcomputer incorporating the debugging function can increase.

Unlike the conventional microcomputer, the microcomputer need not incorporate any PC trace bus or emulation/data trace bus for connecting the bus controller and debugging controller. The microcomputer can be more simplified.

## Claims

1. A microcomputer comprising:
an internal memory (120) storing a control program;
a CPU (Central Processing Unit) core (102) for executing the control program stored in said internal memory, said CPU core outputting a control signal made up of connection information containing a storage address of the control program in said internal memory and an address of said internal memory generated as a result of executing the control program, instruction contents of the control program, and data generated by executing the control program;
a debugging controller (101) for generating trace information necessary for debugging operation for confirming an operation by the control program, said debugging controller having trace information generation means (110) for extracting the instruction contents in the control signal as trace information when the control signal is received from said CPU core, and trace information output means (111) for externally outputting the trace information output from said trace information generation means;
**characterised by** further comprising:
a bus controller (103) for controlling signal exchange based on an operation of said CPU core via an address bus and a data bus that are connected to an external memory, said bus controller having data I/O control means (112) for, when the control signal is received from said CPU core, outputting an address obtained from the connection information in the control signal to the external address bus, and outputting the data in the control signal to the external data bus; and
wherein said bus controller (103) comprises a priority processing controller (113) for preferentially performing trace information output processing when trace information output processing by said debugging controller collides with signal exchange processing with the external memory by said data I/O control means.

2. A microcomputer according to claim 1, wherein said priority processing controller instructs at least said data I/O control means to suspend signal exchange processing with the external memory when two processes collide with each other.

3. A microcomputer according to claim 1, wherein the trace information is made up of an 8-bit signal.

4. A microcomputer according to claim 1, wherein said bus controller outputs an active-high signal representing effective write to the external memory in outputting an address and data to the external address bus and the external data bus, respectively.

## Patentansprüche

1. Mikrocomputer, umfassend:
einen internen Speicher (120), welcher ein Steuerprogramm speichert;
einen CPU (zentrale Verarbeitungseinheit)-Kern (102) zum Ausführen des in dem internen Speicher gespeicherten Steuerprogramms, wobei der CPU-Kern ein Steuersignal ausgibt, welches aus Verbindungsinformation, die eine Speicheradresse des Steuerprogramms in dem internen Speicher und eine als ein Ausführungsergebnis des Steuerprogramms erzeugte Adresse des internen Speichers enthält, Anweisungsinhalten des Steuerprogramms und durch Ausführung des Steuerprogramms erzeugten Daten besteht;
eine Fehlersuche-Steuereinheit (101) zum Erzeugen von Ablaufinformation, die bei einer Fehlersuchoperation zum Bestätigen einer Operation durch das Steuerprogramm erforderlich ist, wobei die Fehlersuche-Steuereinheit Ablaufinformationserzeugungsmittel (110) zum Extrahieren des Anweisungsinhaltes aus dem Steuersignal als Ablaufinformation, wenn das Steuersignal von dem CPU-Kern empfangen ist, und Ablaufinformationsausgabemittel (111) zum externen Ausgeben der von dem Ablaufinformationserzeugungsmittel ausgegebenen Ablaufinformation aufweist;
**dadurch gekennzeichnet, dass** er ferner umfasst:
eine Bus-Steuereinheit (103) zum Steuern des Signalaustausches basierend auf einer Operation des CPU-Kerns über einen Adressbus und einen Datenbus, die mit einem externen Speicher verbunden sind, wobei die Bus-Steuereinheit ein Daten-I/O-Steuermittel (112) zum Ausgeben einer aus der Verbindungsinformation in dem Steuersignal erhaltenen Adresse an den externen Adressbus, wenn das Steuersignal von dem CPU-Kern empfangen ist, und zum Ausgeben der Daten in dem Steuersignal an den externen Datenbus aufweist; und
wobei die Bus-Steuereinheit (103) eine Prioritätsverarbeitungssteuereinheit (113) zum bevorzugten Durchführen einer Ablaufinformationsausgabeverarbeitung, wenn die Ablaufinformationsausgabeverarbeitung durch die Fehlersuche-Steuereinheit mit einer Signalaustauschverarbeitung mit dem externen Speicher durch das Daten-I/O-Steuermittel kollidiert.

2. Mikrocomputer nach Anspruch 1, wobei die Prioritätsverarbeitungssteuereinheit wenigstens das Daten-I/O-Steuermittel dazu anweist, die Signalaustauschverarbeitung mit dem externen Speicher anzuhalten, wenn zwei Prozesse miteinander kollidieren.

3. Mikrocomputer nach Anspruch 1, wobei die Ablaufinformation aus einem 8-Bit Signal besteht.

4. Mikrocomputer nach Anspruch 1, wobei die Bus-Steuereinheit ein Aktiv-Hoch-Signal, welches ein aktives Schreiben auf dem externen Speicher kennzeichnet, beim Ausgeben einer Adresse und Daten an den externen Adressbus bzw. den externen Datenbus ausgibt.

## Revendications

1. Micro-ordinateur comprenant :
une mémoire interne (120) stockant un programme de commande ;
un coeur de CPU (unité centrale) (102) pour exécuter le programme de commande stocké dans ladite mémoire interne, ledit coeur de CPU délivrant un signal de commande constitué d'informations de connexion contenant une adresse de stockage du programme de commande dans ladite mémoire interne et une adresse de ladite mémoire interne générée en conséquence de l'exécution du programme de commande, des contenus d'instruction du programme de commande, et des données générées par l'exécution du programme de commande ;
un contrôleur de débogage (101) pour générer des informations de suivi nécessaires pour l'opération de débogage pour confirmer une opération par le programme de commande, ledit contrôleur de débogage ayant des moyens de génération d'informations de suivi (110) pour extraire les contenus d'instructions dans le signal de commande en tant qu'informations de suivi lorsque le signal de commande est reçu dudit coeur de CPU, et des moyens de sortie d'informations de suivi (111) pour délivrer à l'extérieur les informations de suivi délivrées par lesdits moyens de génération d'informations de suivi ;
**caractérisé en ce qu'**il comprend en outre :
un contrôleur de bus (103) pour contrôler l'échange de signal sur la base d'une opération dudit coeur de CPU par le biais d'un bus d'adresse et d'un bus de données qui sont connectés à une mémoire externe, ledit contrôleur de bus ayant des moyens de commande d'entrée/sortie de données (112) pour, lorsque le signal de commande est reçu dudit coeur de CPU, délivrer une adresse obtenue à partir des informations de connexion dans le signal de commande au bus d'adresse externe, et délivrer les données dans le signal de commande au bus de données externe ; et
dans lequel ledit contrôleur de bus (103) comprend un contrôleur de traitement de priorité (113) pour effectuer préférentiellement un traitement de sortie d'informations de suivi lorsque le traitement de sortie d'informations de suivi par ledit contrôleur de débogage est en collision avec le traitement d'échange de signal avec la mémoire externe par lesdits moyens de commande d'entrée/sortie de données.

2. Micro-ordinateur selon la revendication 1, dans lequel ledit contrôleur de traitement de priorité ordonne au moins aux dits moyens de commande d'entrée/sortie de données de suspendre le traitement d'échange de signal avec la mémoire externe lorsque deux processus sont en collision l'un avec l'autre.

3. Micro-ordinateur selon la revendication 1, dans lequel les informations de suivi sont constituées d'un signal de 8 bits.

4. Micro-ordinateur selon la revendication 1, dans lequel ledit contrôleur de bus délivre un signal haut actif représentant l'écriture effective dans la mémoire externe en délivrant une adresse et des données respectivement au bus d'adresse externe et au bus de données externe.
